# FASCICULE DE BREVET EUROPEEN

(11) **EP 4 367 195 B1**
(45) Date de publication et mention de la délivrance du brevet: **19.03.2025**
(21) Numéro de dépôt: 22754114.1
(22) Date de dépôt: 06.07.2022
(51) Int. Cl.: C09J 201/10, C09J 7/38, C08G 65/336, C08K 9/06, C09J 171/02, C09J 175/08, C08K 3/36, C09J 7/25, C09J 143/04, C08K 5/549

(54) **COMPOSITION RETICULABLE DE POLYMERE A TERMINAISON SILYL ET PROCEDE D'ASSEMBLAGE DE SUBSTRATS LA METTANT EN OEUVRE**
VERNETZBARE SILYLTERMINIERTE POLYMERZUSAMMENSETZUNG UND VERFAHREN ZUM VERBINDEN VON SUBSTRATEN MIT DIESER ZUSAMMENSETZUNG
CROSS-LINKABLE SILYL-TERMINATED POLYMER COMPOSITION AND METHOD FOR JOINING SUBSTRATES IMPLEMENTING SAID COMPOSITION

(30) Priorité: 08.07.2021 FR 2107429
(43) Date de publication de la demande: 15.05.2024
(73) Titulaire: Bostik SA, 92700 Colombes (FR)
(72) Inventeur: MAMERI, Foudil, 60280 VENETTE (FR); LALOUCH, Lahoussaine, 60280 VENETTE (FR); BORDAT, Jean-Marie, 60280 VENETTE (FR)
(74) Mandataire: Arkema Patent
(86) Numéro de dépôt international: PCT/FR2022/051354
(87) Numéro de publication internationale: WO 2023/281216

(56) Documents cités:
- EP-A1- 1 095 981
- EP-A1- 2 615 147
- EP-A2- 0 336 431
- WO-A1-2015/195391
- WO-A1-2020/128200
- JP-A- 2014 001 319
- JP-A- 2019 147 925

## Description

### DOMAINE DE L'INVENTION

La présente invention a pour objet une nouvelle composition adhésive réticulable à base d'un polymère comprenant au moins un groupe alkoxysilane hydrolysable. Elle concerne également son utilisation comme adhésif semi-structural pour l'assemblage de deux substrats. Elle concerne enfin un procédé d'assemblage de deux substrats par collage, qui comprend le dépôt de ladite composition, notamment sous la forme d'un cordon, sur une surface de l'un des deux substrats à assembler.

### ARRIERE PLAN TECHNIQUE

Dans de nombreux domaines industriels, les adhésifs sont utilisés pour l'assemblage semi-structural des substrats les plus divers. On entend par assemblage semi-structural un assemblage de deux substrats dans lequel le joint adhésif est capable de résister à des contraintes de cisaillement comprises dans un domaine allant de 2 à 8 MPa.

Par exemple, dans la construction automobile, les adhésifs jouent un rôle majeur dans la fabrication et l'assemblage des différents équipements destinés aux voitures, ainsi que dans la fixation desdits équipements ou de divers éléments sur le châssis, en vue de l'habillage de la carrosserie pour former l'habitacle. Il peut ainsi s'agir de la garniture intérieure des portières, du toit, du plancher, du coffre ou encore de l'assemblage des sièges ou des parebrises. D'autres éléments comme les filtres, tels que le filtre à air, sont également fixés au moyen d'adhésifs, au voisinage du moteur.

Ainsi, toutes sortes de substrats peuvent être assemblés entre eux au moyen d'adhésifs de type semi-structural, et/ou fixés au châssis métallique des voitures, sur des chaînes de fabrication automatisées.

Les adhésifs thermofusibles (ou Hot Melt) sont couramment utilisés pour ce type d'application.

Les adhésifs thermofusibles sont des adhésifs exempts de solvant, qui sont solides ou très visqueux à température ambiante, et qui sont appliqués, à l'état fondu, à une température allant de 150°C à 210°C , sur le substrat à fixer et/ou à assembler. Après refroidissement, l'adhésif revient à l'état solide et forme donc, à l'issue d'un processus physique, un joint adhésif cohésif qui solidarise les deux substrats à assembler. Ledit joint adhésif peut ainsi supporter des contraintes de cisaillement dans un domaine allant environ de 2 à 8 MPa. Les adhésifs thermofusibles se présentent généralement sous la forme de compositions qui comprennent un polymère thermoplastique et éventuellement une résine tackifiante et un plastifiant.

En vue de la formation d'un assemblage, les adhésifs thermofusibles sont souvent déposés sous la forme d'un cordon sur une surface d'un premier substrat. Un tel cordon est obtenu par extrusion de l'adhésif à chaud au travers d'une filière reliée ou bien à une cartouche maniée par un opérateur, ou bien à un réservoir (dans le cas d'une application robotisée sur une chaîne de montage). Le cordon peut ainsi être positionné avec précision sur la surface du premier substrat, à l'emplacement souhaité pour l'assemblage avec une surface d'un deuxième substrat. Le diamètre du cordon peut également être ajusté dans un domaine allant par exemple de 2 mm à 2 cm, en fonction de la quantité souhaitée pour l'enduction, en vue de la formation du joint adhésif.

L'inconvénient des adhésifs thermofusibles est toutefois que, du fait même de la présence d'un polymère thermoplastique dans le joint adhésif, ce dernier présente, dans l'assemblage final et l'article qui le contient, une résistance à la chaleur qui, au cours de la durée de vie de l'assemblage, peut se révéler insuffisante selon les conditions de température et de contrainte auxquelles ledit assemblage est exposé. Un autre inconvénient des adhésifs thermofusibles est également leur température d'application très élevée, telle que définie précédemment.

C'est la raison pour laquelle des adhésifs thermofusibles réactifs (ou réticulables) ont été mis au point et sont couramment mis en œuvre dans différents domaines industriels, incluant le domaine de l'assemblage semi-structural et/ou le domaine de la construction automobile.

Les adhésifs thermofusibles réticulables sont également solides ou très visqueux à température ambiante, et appliqués à chaud sur un substrat. Après refroidissement, un tel adhésif retrouve donc également sa forme solide, donnant ainsi une cohésion initiale au joint adhésif qui est désignée souvent dans le métier par les termes anglais de « green strength ». En outre, la cohésion dudit joint est considérablement renforcée sous l'effet d'une réaction chimique de réticulation qui se déroule en présence de l'humidité présente dans l'air ambiant et/ou à la surface des substrats à assembler. Avant réticulation, la composition constitutive du joint adhésif reste thermoplastique et peut-être re-fondue et re-solidifiée. Après réticulation, les chaînes du polymère compris dans la composition adhésive sont reliées par une liaison chimique les unes aux autres pour former un réseau tridimensionnel, avec pour conséquence que le joint adhésif n'est dès lors plus thermoplastique mais sous une forme solide irréversible.

Une telle composition adhésive réticulée confère ainsi au joint adhésif une cohésion finale et une résistance à la chaleur largement améliorées par rapport à un adhésif thermofusible non réactif.

Les adhésifs thermofusibles réactifs sont généralement des adhésifs thermofusibles polyuréthanes réticulant à l'humidité, également désignés par HMPUR (pour Hot Melt PolyURéthane). La partie réactive de la composition correspondante est constituée par un prépolymère polyuréthane à terminaisons isocyanates qui réagit avec l'humidité, de telle sorte que les chaînes polymériques sont reliées par une liaison urée pour former un réseau tridimensionnel. Les prépolymères polyuréthane à terminaisons isocyanates sont classiquement préparés en faisant réagir des diols avec des diisocyanates en excès. Ces HMPUR peuvent être commodément mis en œuvre sous la forme de cordons, et présentent comme avantages une vitesse de réticulation élevée, d'excellentes propriétés mécaniques pour le joint adhésif après réticulation et une adhésion à une grande variété de substrats.

Ces HMPUR présentent toutefois un inconvénient lié à la présence, dans la composition adhésive, de quantités résiduelles significatives des diisocyanates, plus volatiles, qui sont mis en œuvre dans la préparation du prépolymère polyuréthane à terminaisons isocyanates. Dans le domaine de température d'application (typiquement autour de 90-100 °C), les diisocyanates monomères non réagis contenus dans la composition adhésive ont une pression de vapeur considérable et peuvent se dégager sous la forme gazeuse. Ces vapeurs de diisocyanates peuvent être toxique, notamment irritantes, de telles sorte que des mesures de sécurité doivent être prises dans le procédé industriel de mise en œuvre de l'HMPUR. Outre ce problème de toxicité, les HMPUR émettent du dioxyde de carbone durant la réaction de réticulation. La formation de dioxyde de carbone dans des adhésifs amorphes peut entraîner la formation de bulles dans le joint adhésif en cours de réticulation.

Des compositions adhésives thermofusibles réactives comprenant un polymère comprenant au moins un groupe alkoxysilane hydrolysable ont été développées comme alternative aux HMPUR. On peut ainsi citer les compositions adhésives à base de polymères modifiés silane (Polymères MS ou MS Polymers pour « Modified Silane Polymers » en anglais) à teneur élevée en charges, bien connues dans le domaine des adhésifs, qui sont utilisées pour l'assemblage par collage d'une grande variété d'objets. Les polymères MS sont des polymères dont la chaîne principale est un polyéther, tel qu'un poly(oxypropylène), et qui comprennent au moins un, de préférence deux groupes terminaux silyl (ou alkoxysilane).

Les joints adhésifs obtenus à partir de telles compositions adhésives résultent donc d'une réaction de réticulation des chaînes polymériques, via le groupe terminal alkoxysilane, en présence d'humidité atmosphérique ou de l'humidité présente à la surface des substrats. Ces joints comprennent ainsi un réseau polymérique tridimensionnel dans lequel les chaînes polymériques sont reliées par des liaisons siloxane et permettent, en raison de leur cohésion, l'obtention d'un assemblage solide. Ces joints sont également avantageusement résistants en température.

On connaît par ailleurs des compositions adhésives à base de polyuréthane (ou polyéther) à terminaison alkoxysilanes qui sont décrites notamment par les trois demandes de brevet de Bostik : WO 09/106699, EP2336208 et WO 2020/128200. Ces compositions adhésives, exemptes de solvant et d'eau, sont mises en œuvre par enduction sur une couche support à une température comprise entre 50 et 150°C, en vue de la préparation de supports auto-adhésifs, utilisables notamment pour la fabrication d'étiquettes qui peuvent commodément être fixées, grâce au joint adhésif formé, sur toutes sortes de substrats.

JP 2019 147925 A, EP 2 615 147 A1, JP 2014 001319 A et EP 1 095 981 A1 divulguent une composition adhésive comprenant une composition de résine incluant un copolymère ayant un groupe alkoxysilane hydrolysable, une silice pyrogénée, une résine tackifiante et un catalyseur de réticulation.

WO 2015/195391 A1 divulgue une composition auto-adhésive comprenant au moins un monomère éthylénique insaturé formant un polymère ayant une température de transition vitreuse faible, et au moins un agent de réticulation à base d'un polymère silsesquioxane comprenant une pluralité de groupes éthyléniquement insaturés.

Toutefois, si la mise en œuvre de ces dernières compositions adhésives ne présente pas de risque lié au contact possible avec des monomères diisocyanates, son utilisation comme adhésif semi-structural se heurte à un inconvénient majeur lié à un risque de coulure particulièrement important.

En effet, il peut arriver que, soit la 1ère surface sur laquelle est déposée initialement le cordon de colle, soit les 2 substrats juste après leur mise en contact, soient en position non horizontale, notamment verticale, alors même que la réticulation de la colle n'est pas achevée. Ceci a pour effet d'exposer à la force de gravité soit ledit cordon soit le joint adhésif non réticulé qui lie les 2 substrats dans l'assemblage. Il en résulte par conséquent un risque de déformation ou de fluage ou même de coulure (également qualifié en langue anglaise par "sagging" ou "slump"), sous l'action de la contrainte résultant de ladite force.

Un tel changement de forme du cordon (ou du joint adhésif non réticulé) est désigné dans la suite du présent texte par le terme général de " coulure". Il peut ainsi avoir pour conséquence une variation de l'épaisseur de la colle en cours de réticulation entre les 2 substrats, et donc une inhomogénéité, notamment dimensionnelle, du joint adhésif qui lie solidement les 2 substrats dans l'assemblage final obtenu après réticulation complète. Cette inhomogénéité du joint adhésif est particulièrement susceptible d'affecter ses propriétés mécaniques.

Un but de la présente invention est ainsi de limiter et/ou de supprimer la coulure (ou le fluage) des compositions adhésives à base de polyuréthane (ou polyéther) à terminaisons alkoxysilanes, notamment telles que décrites par la demande de Bostik SA WO 2020/128200 sus- mentionnée.

Par ailleurs, en raison d'un temps de réticulation à température ambiante élevé, il est en général nécessaire de procéder à la mise en œuvre de ces compositions à chaud et en présence d'humidité, ce qui peut entraîner la nécessité, lorsque l'on souhaite procéder à l'assemblage de substrats sur une chaîne automatisée, de prévoir sur celle-ci des chambres à humidité et température contrôlées.

Un autre but de la présente invention est ainsi de proposer une composition adhésive réticulable à base d'un polymère comprenant au moins un groupe alkoxysilane hydrolysable, qui permette l'assemblage de 2 substrats, par une réaction de réticulation qui ne nécessite pas de contrôle de l'humidité relative et/ou qui s'effectue à une température plus basse, notamment à une température inférieure à 50 °C, et même à température ambiante.

Un autre but de la présente invention est de proposer une composition adhésive réticulable à base d'un polymère comprenant au moins un groupe alkoxysilane hydrolysable, qui réticule à température et/ou humidité ambiantes en un temps réduit.

Un autre but de l'invention est que le joint adhésif qui est formé par la réticulation et qui assure l'assemblage des 2 substrats, présente une résistance à la chaleur améliorée.

Un autre but de l'invention est que ledit joint adhésif présente une résistance mécanique améliorée.

Un autre but de l'invention est que l'épaisseur dudit joint adhésif présente soit plus uniforme ou homogène.

Il a à présent été trouvé que ces buts peuvent être atteints en totalité ou en partie au moyen de la composition adhésive, de son utilisation comme adhésif semi-structural, et du procédé d'assemblage de deux substrats qui sont décrits ci-après.

### DESCRIPTION DE L'INVENTION

### Composition adhésive réticulable :

La présente invention a donc pour objet en premier lieu une composition adhésive réticulable, caractérisée en ce qu'elle comprend :
- au moins un polymère (A) comprenant un groupe alkoxysilane hydrolysable ;
- au moins une résine tackifiante (B) ;
- au moins une silice pyrogénée (C) ;
- au moins un catalyseur de réticulation et
- une résine silsesquioxane (E).

Il a à présent été trouvé que le fluage (ou sagging) de ladite composition adhésive est considérablement abaissé par rapport aux compositions adhésives à base de polyuréthane (ou polyéther) à terminaison alkoxysilanes, qui sont décrites notamment dans le WO 2020/128200. Elle peut ainsi avantageusement conduire au dépôt de ladite composition sur une surface d'un 1^{er} substrat, même à raison d'un grammage élevé, et notamment sous la forme d'un cordon, ce qui conduit, après réticulation et mise en contact avec un second substrat, à un assemblage dont le joint adhésif est homogène et d'épaisseur uniforme.

Par ailleurs, le temps de réticulation de ladite composition réticulable est également, largement réduit à température et humidité ambiantes, par rapport aux compositions du WO 2020/128200. Ce temps de réticulation peut avantageusement être encore plus abaissé lorsque la réticulation est réalisée au moyen d'une chambre à température et humidité contrôlées ; ce qui est particulièrement favorable à l'augmentation de la productivité de la fabrication de l'assemblage, par exemple lorsque celle-ci est réalisée sur les chaînes de montage des constructeurs automobiles.

En outre, ladite composition adhésive peut être appliquée dans un domaine de température allant de 30°C à 130°C, de préférence de 90°C à 130°C, soit à une température d'application plus basse que celle d'un adhésif thermofusible.

De plus, outre les avantages énoncés précédemment pour la mise en œuvre de la composition adhésive réticulable, le joint adhésif formé entre les 2 substrats dans l'assemblage offre, du fait de la présence du réseau tridimensionnel formé par la réticulation, une résistance à la chaleur largement améliorée par rapport aux adhésifs thermofusibles non réactifs connus de l'art antérieur. Enfin, ledit joint adhésif présente, par rapport aux compositions du WO 2020/128200, des propriétés améliorées de cohésion et d'adhésion aux substrats. Ces propriétés sont quantifiées par des mesures de contrainte de rupture à la traction sur le joint adhésif seul et de contrainte de rupture en cisaillement sur le joint adhésif unissant 2 substrats dans un assemblage.

### Polymère (A) :

Au sens de la présente invention, on entend par polymère (A) comprenant un groupement alkoxysilane hydrolysable, un polymère qui comprend au moins un, et de préférence au moins deux, groupements hydrolysables de formule (1) :

-Si(R⁴)ₚ(OR⁵)₃₋ₚ (1)

dans laquelle :
- R⁴ représente un radical alkyl linéaire ou ramifié comprenant de 1 à 4 atomes de carbone, avec la possibilité que quand il y a plusieurs radicaux R⁴, ces derniers soient identiques ou différents ;
- R⁵ représente un radical alkyl linéaire ou ramifié comprenant de 1 à 4 atomes de carbone, avec la possibilité que quand il y a plusieurs radicaux R⁵, ces derniers soient identiques ou différents, avec la possibilité que deux groupements OR⁵ puissent être engagés dans un même cycle ; et
- p est un nombre entier égal à 0, 1 ou 2, de préférence égal à 0 ou 1.

Le groupement alkoxysilane hydrolysable est de préférence positionné en terminaison dudit polymère. Un positionnement en milieu de chaîne n'est toutefois pas exclu. Le polymère (A) n'est pas réticulé avant l'application de la composition adhésive. La composition adhésive est appliquée dans des conditions permettant sa réticulation.

Le polymère (A) est donc un polymère silylé qui se présente généralement sous forme de liquide plus ou moins visqueux. De préférence, le polymère (A) présente une viscosité, en particulier à 23°C, allant de 10 à 200 Pa.s, de préférence allant de 20 à 175 Pa.s, ladite viscosité étant par exemple mesurée selon une méthode de type Brookfield à 23°C et 50% d'humidité relative (aiguille S28).

Le polymère (A) comprend de préférence deux groupements de formule (1), mais il peut également comprendre de trois à six groupements de formule (I).

De préférence, le ou les polymères (A) présentent une masse moléculaire moyenne en nombre (Mn) allant de 500 à 50000 g/mol, de préférence encore allant de 700 à 20000 g/mol. La masse moléculaire moyenne en nombre (Mn) des polymères peut être calculée ou mesurée par des méthodes bien connues de l'homme du métier, par exemple par RMN et chromatographie d'exclusion stérique en utilisant des étalons de type polystyrène.

Selon un mode de réalisation de l'invention, le polymère (A) répond à l'une des formules (II), (III) ou (IV) : 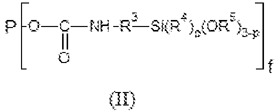 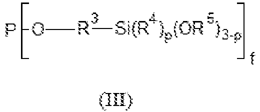 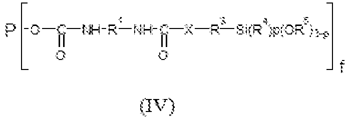 dans lesquelles :
- R⁴, R⁵ et p ont la même signification que dans la formule (I) décrite ci-dessus,
- P représente un radical polymérique saturé ou insaturé, linéaire ou ramifié comprenant éventuellement un ou plusieurs hétéroatomes, tels que oxygène, azote, soufre, silicium, et présentant de préférence une masse moléculaire moyenne en nombre (Mn) allant de 100 g/mol à 48600 g/mol, plus particulièrement de 300 g/mol à 18600 g/mol ou encore de 500 g/mol à 12600 g/mol,
- R¹ représente un radical divalent hydrocarboné comprenant de 5 à 15 atomes de carbone qui peut être aromatique ou aliphatique, linéaire, ramifié ou cyclique,
- R³ représente un radical divalent alkylène linéaire ou ramifié comprenant de 1 à 6 atomes de carbone, de préférence de 1 à 3 atomes de carbone,
- X représente un radical divalent choisi parmi -NH-, -NR⁷- ou -S-,
- R⁷ représente un radical alkyl linéaire ou ramifié comprenant de 1 à 20 atomes de carbone et pouvant également comprendre un ou plusieurs hétéroatomes, et
- f est un entier allant de 1 à 6, de préférence allant de 2 à 5, de préférence de 2 à 4, de préférence encore allant de 2 à 3.

De préférence, dans les formules (II), (III) et/ou (IV) ci-dessus, P représente un radical polymérique choisi de manière non limitative parmi les polyéthers, polycarbonates, polyesters, polyoléfines, polyacrylates, polyéther polyuréthanes, polyester polyuréthanes, polyoléfine polyuréthanes, polyacrylate polyuréthanes, polycarbonate polyuréthanes, polyéther/polyester polyuréthanes à blocs.

Par exemple, le document EP 2468783 décrit des polymères silylés de formule (II) dans lesquels P représente un radical polymérique à blocs polyuréthane/polyester/polyéther.

Selon un mode de réalisation, les polymères silylés sont choisis parmi les polyuréthanes silylés, les polyéthers silylés, et leurs mélanges.

Selon un mode de réalisation particulier, le polymère silylé (A) répond à l'une des formules (II'), (III') ou (IV') : 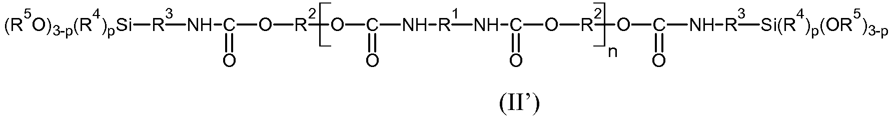 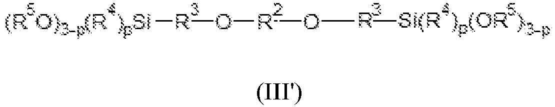 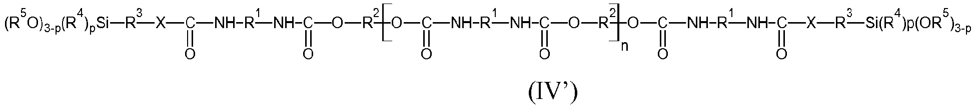 dans lesquelles :
- R¹, R³, R⁴, R⁵, X, R⁷ et p ont la même signification que dans les formules (II), (III) et (IV) décrites ci-dessus,
- R² représente un radical divalent hydrocarboné saturé ou insaturé, linéaire ou ramifié comprenant éventuellement un ou plusieurs hétéroatomes, tels que oxygène, azote, soufre, silicium, et présentant de préférence une masse moléculaire moyenne en nombre (Mn) allant de 100 g/mol à 48600 g/mol, plus particulièrement de 300 g/mol à 18600 g/mol ou encore de 500 g/mol à 12600 g/mol, et
- n est un entier supérieur ou égal à 0.

Dans les polymères silylés de formules (II'), (III') ou (IV') définies ci-dessus, lorsque le radical R² comprend un ou des hétéroatomes, ledit ou lesdits hétéroatomes ne sont pas présents en bout de chaîne. Autrement dit, les valences libres du radical divalent R² liées aux atomes d'oxygène voisin du polymère silylé, proviennent chacune d'un atome de carbone. Ainsi, la chaine principale du radical R² est terminée par un atome de carbone à chacune des deux extrémités, ledit atome de carbone présentant alors une valence libre.

Selon un mode de réalisation, les polymères silylés (A) sont obtenus à partir de polyols choisis parmi les polyéthers polyols, les polyesters polyols, les polycarbonates polyols, les polyacrylates polyols, les polysiloxanes polyols et les polyoléfines polyols et leurs mélanges, et de préférence encore à partir de diols choisis parmi les polyéthers diols, les polyesters diols, les polycarbonates diols, les polyacrylates diols, les polysiloxanes diols, les polyoléfines diols et leurs mélanges. Dans le cas des polymères de formules (II'), (III') ou (IV') décrites ci-dessus, de tels diols peuvent être représentés par la formule HO-R²-OH où R² a la même signification que dans les formules (II'), (III') ou (IV').

Par exemple, parmi les radicaux de type R² qui peuvent être présents dans les formules (II'), (III') ou (IV'), on peut citer les radicaux divalents suivants dont les formules ci-dessous font apparaître les 2 valences libres :
- dérivé d'un polypropylène glycol : 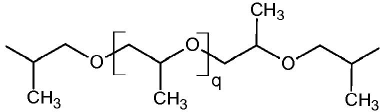
- dérivé d'un polyester diol: 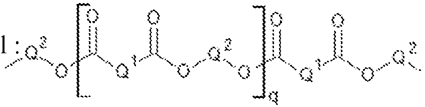
- dérivé d'un polybutadiène diol : 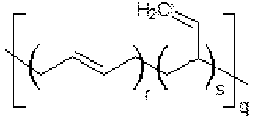
- dérivé d'un polyacrylate diol : 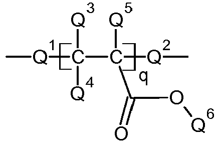
- dérivé d'un polysiloxane diol :

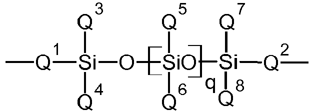

Dans les formules ci-dessus, la signification des radicaux et indices est la suivante :
- q représente un entier tel que la masse moléculaire moyenne en nombre du radical R² va de 100 g/mol à 48600 g/mol, de préférence de 300 g/mol à 18600 g/mol, de préférence encore de 500 g/mol à 12600 g/mol,
- r et s représentent zéro ou un entier non nul tel que la masse moléculaire moyenne en nombre (Mn) du radical R² va de 100 g/mol à 48600 g/mol, de préférence de 300 g/mol à 18600 g/mol, de préférence encore de 500 g/mol à 12600 g/mol, étant entendu que la somme r+s est différente de zéro,
- Q¹ représente un radical alkylène divalent aromatique ou aliphatique linéaire ou ramifié, saturé ou insaturé, présentant de préférence de 1 à 18 atomes de carbone, de préférence encore de 1 à 8 atomes de carbone,
- Q² représente un radical alkylène divalent linéaire ou ramifié présentant de préférence de 2 à 36 atomes de carbone, de préférence encore de 1 à 8 atomes de carbone,
- Q³, Q⁴, Q⁵, Q⁶, Q⁷ et Q⁸, représentent, indépendamment les uns des autres, un atome d'hydrogène ou un radical alkyle, alkényle ou aromatique, présentant de préférence de 1 à 12 atomes de carbone, de préférence de 2 à 12 atomes de carbone, de préférence encore de 2 à 8 atomes de carbone.

Selon mode de réalisation de la composition selon l'invention, le polymère silylé (A) est tel que le radical R² qui apparaît dans les formules (II'), (III') et (IV') représente un radical polyéther, de préférence un radical poly(oxyalkylène), et de manière encore plus préférée un radical dérivé d'un polypropylène glycol répondant à la formule indiquée plus haut.

Selon un mode de réalisation, R¹ est choisi parmi l'un des radicaux divalents suivants dont les formules ci-dessous font apparaître les 2 valences libres :
a) le radical divalent dérivé de l'isophorone diisocyanate (IPDI) : 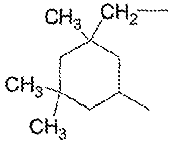
b) le radical divalent dérivé du dicyclohexylmethane diisocyanate (H12MDI) 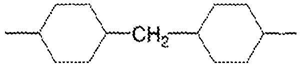
c) le radical divalent dérivé du toluène diisocyanate (TDI) 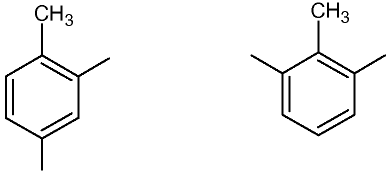
d) les radicaux divalents dérivés des isomères 4,4' et 2,4'- du diphénylmethane diisocyanate (MDI) 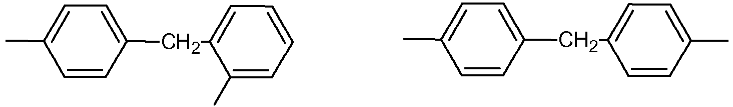
e) le radical divalent dérivé de l'hexaméthylène diisocyanate (HDI) -(CH₂)₆-
f) le radical divalent dérivé du m-xylylène diisocyanate (m-XDI)

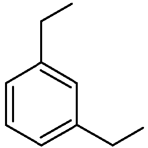

Les polymères de formule (II) ou (II') peuvent être obtenus selon un procédé décrit dans les documents EP 2336208 et WO 2009/106699. L'homme du métier saura adapter le procédé de fabrication décrit dans ces deux documents dans le cas de l'utilisation de différents types de polyols. Parmi les polymères répondant à la formule (II), on peut citer :
- GENIOSIL^{®} STP-E10 (disponible auprès de WACKER) : polyéther comprenant deux groupements (I) de type diméthoxy (n égal à 0, p égal à 1 et R⁴ et R⁵ représentent un groupement méthyle) présentant une masse moléculaire moyenne en nombre de 8889 g/mol où R³ représente un groupement méthyle;
- GENIOSIL^{®} STP-E30 (disponible auprès de WACKER) : de masse moléculaire moyenne en nombre de 14493 g/mol, il s'agit d'un polypropylène glycol avec 2 groupes terminaux constitués d'un diméthoxy(méthyl)silylméthylcarbamate, soit dans la formule (II') : n égal à 0 ; p égal à 1 ; R⁴ et R⁵ représentent un groupement méthyle et R³ représente un groupement méthyle ;
- DESMOSEAL^{®} S XP 2636 (disponible auprès de BAYER) : polyuréthane comprenant deux groupements (I) de type triméthoxy (n différent de 0, p égal à 0 et R⁵ représente un groupement méthyle) présentant une masse moléculaire moyenne en nombre de 15038 g/mol où R³ représente un groupement n-propylène.

Les polymères de formule (III) ou (III') peuvent être obtenus par hydrosilylation de polyéther diallyléther selon un procédé décrit par exemple dans le document EP 1829928. Parmi les polymères répondant à la formule (III), on peut citer :
- le polymère MS SAX^{®} 350 (disponible auprès de KANEKA) correspondant à un polyéther comprenant deux groupements (I) de type diméthoxy (p égal à 1 et R⁴ et R⁵ représentent un groupement méthyle) ayant une masse moléculaire moyenne en nombre allant de 14000 à 16000 g/mole ;
- le polymère MS SAX^{®} 260 (disponible auprès de KANEKA) correspondant à un polyéther comprenant deux groupements (I) de type diméthoxy (p égal à 1, R⁴ et R⁵ représentent un groupement méthyle) présentant une masse moléculaire moyenne en nombre de 16000 à 18000 g/mol où R³ représente un groupement éthyle ;
- le polymère MS S303H (disponible auprès de KANEKA) correspondant à un polyéther comprenant deux groupements (I) de type diméthoxy (p est égal à 1 et R⁴ représente un groupement méthyle) ayant une masse moléculaire moyenne en nombre d'environ 22 000 g/mol.

Les polymères de formule (IV) ou (IV') peuvent par exemple être obtenus par réaction de polyol(s) avec un ou des diisocyanate(s) suivie d'une réaction avec des aminosilanes ou des mercaptosilanes. Un procédé de préparation de polymères de formule (IV) ou (IV') est décrit dans le document EP 2 583 988. L'homme du métier saura adapter le procédé de fabrication décrit dans ce document dans le cas de l'utilisation de différents types de polyols. Parmi les polymères répondant à la formule (IV) ou (IV'), on peut citer :
- SPUR+^{®} 1050MM (disponible auprès de MOMENTIVE) : polyuréthane comprenant deux groupements (I) de type triméthoxy (n différent de 0, p égal à 0 et R⁵ représente un groupement méthyle) présentant une masse moléculaire moyenne en nombre de 16393 g/mol où R³ représente un groupement n-propyle ;
- SPUR+^{®} Y-19116 (disponible auprès de MOMENTIVE) : polyuréthane comprenant deux groupements (I) de type triméthoxy (n différent de 0 et R⁵ représente un groupement méthyle) présentant une masse moléculaire moyenne en nombre allant de 15000 à 17000 g/mol g/mol où R³ représente un groupement n-propyle.

Selon un mode de réalisation préféré de l'invention, la composition adhésive comprend au moins un polymère silylé (A) de formule (II) et/ou (II') ou au moins un polymère silylé (A) de formule (III) et/ou (III').

Selon un mode de réalisation tout particulièrement préféré de l'invention, le polymère (A) est un polymère silylé de formule (II') dans laquelle n égale 0, R² est un radical divalent dérivé d'un polyéther, de préférence d'un poly(oxyalkylène) diol, et encore plus particulièrement d'un polypropylène glycol.

### Résine tackifiante (B) :

La composition adhésive réticulable selon l'invention comprend également au moins une résine tackifiante (B).
Ladite résine peut être toute résine compatible avec le ou les polymère(s) silylé(s) (A).

On entend désigner par les termes "résine tackifiante compatible" une résine tackifiante qui, lorsqu'elle est mélangée dans les proportions 50%/50% (notamment en poids) avec le (ou les) polymère (A), donne un mélange substantiellement homogène.

Les résines (B) sont avantageusement choisies parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène, ledit procédé pouvant également comprendre une réaction avec des phénols ;
- (iii) les colophanes d'origine naturelle ou modifiées, (telles que par exemple la colophane extraite de la gomme de pins, la colophane de bois extraite des racines de l'arbre et leurs dérivés hydrogénés, dimérisés, polymérisés ou estérifiés par des monoalcools ou des polyols, comme le glycérol ou le pentaérythritol) ;

- (iv) les résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) les résines terpéniques, (qui résultent généralement de la polymérisation d'hydrocarbures terpéniques - comme par exemple le mono-terpène (ou pinène)- en présence de catalyseurs de Friedel-Crafts) ;
- (vi) les copolymères à base de terpènes naturels, (tels que, par exemple, le styrène/terpène, l'alpha-méthyl styrène/terpène et le vinyl toluène/terpène) ; ou bien
- (vii) les résines acryliques ayant une viscosité à 100°C inférieure à 100 Pa.s ; ainsi que parmi les mélanges de ces résines.

De telles résines sont disponibles commercialement et parmi celles de type (i), (ii), (iii) et (iv) définis ci-dessus, on peut citer les produits suivants :
- résines de type (i) : Dertophène^{®} 1510 disponible auprès de la société DRT possédant une masse moléculaire moyenne en nombre (Mn) d'environ 870 Da ; Dertophène^{®} H150 disponible auprès de la même société de masse moléculaire moyenne en nombre (Mn) égale à environ 630 Da ; Sylvarez^{®} TP 95 disponible auprès de la société Arizona Chemical ayant une masse moléculaire moyenne en nombre (Mn) d'environ 1200 Da ;
- résines de type (ii) : Cleartack^{®} W100 disponible auprès de la société Cray Valley , qui est obtenue par polymérisation d'alpha-méthyl styrène sans action de phénols, avec une masse moléculaire moyenne en nombre (Mn) de 900 Da ; Sylvarez^{®} 510 qui est également disponible auprès de la société Arizona Chemical avec une masse moléculaire moyenne en nombre (Mn) d'environ 1740 Da, dont le procédé d'obtention comprend également l'ajout de phénols ;
- résines de type (iii) : Sylvalite^{®} RE 100 qui est un ester de collophane et de pentaeréthritol disponible auprès de la société Arizona Chemical et de masse moléculaire moyenne en nombre (Mn) d'environ 1700 Da ;
- résines de type (iv) : Picco^{®} AR100 disponible auprès de la société Eastman et de masse moléculaire moyenne en nombre (Mn) d'environ 550 g/mole.

Selon une variante préférée, on utilise comme résine (B) une résine choisie parmi celles de type (i) ou (iv).

### Silice pyrogénée (C) :

La silice pyrogénée (également dénommé « fumed silica » en langue anglaise) se présente sous la forme de très fines particules de silice (de l'ordre du nanomètre), de très faible masse volumique apparente et de surface spécifique très élevée. La silice pyrogénée peut être obtenue par pyrolyse, en présence d'hydrogène et d'oxygène, de composés du silicium, tels que le tétrachlorure de silicium, lui-même préparé à partir de silicium et de chlore.

La silice pyrogénée est initialement hydrophile, en raison de la présence de groupes silanol (Si-OH) à la surface de ses particules constitutives. Elle peut être rendue hydrophobe par réaction de ces groupes silanols avec différents réactifs, généralement une huile de silicone, comme le PolyDiMéthylSiloxane (PDMS).

De préférence, la silice pyrogénée (C) est une silice pyrogénée hydrophobe.

Selon un mode de réalisation, la silice pyrogénée hydrophobe (C) est obtenue par traitement d'une silice pyrogénée avec un PolyDiMéthylSiloxane.

Selon un mode de réalisation, la silice pyrogénée (C) possède une surface spécifique BET d'au moins 10 m²/g, de préférence allant de 50 à 400 m²/g, de manière encore plus préférée de 80 à 290 m²/g. La surface spécifique BET est mesurée, de manière bien connue de l'homme du métier, par détermination d'un isotherme d'adsorption basée sur la méthode de Brunauer, Emmett et Teller (BET), par exemple selon la norme ISO 9277 de Septembre 2010.

Selon un autre mode de réalisation, la silice pyrogénée (C) est obtenue par un traitement de compaction, par exemple à partir d'un compacteur à rouleau ou du procédé décrit par le brevet EP 0 280 851. La masse volumique apparente est quantifiée par une mesure de la densité apparente tassée, mesurée selon la norme ISO 787/11 d'août 1983, qui est généralement comprise dans un domaine allant de 50 à 200 g/l.

De telles silices pyrogénées, notamment hydrophobes, sont disponibles commercialement, comme les produits de la gamme AEROSIL^{®} de la société EVONIK.

On peut notamment citer comme exemple de silice pyrogénée hydrophobe (C) l'AEROSIL^{®} R202 dont la surface spécifique BET est de 100±20 m²/g, la densité apparente tassée d'environ 60 g/l, et qui est rendue hydrophobe par traitement avec le PolyDiMéthylSiloxane. Les particules constitutives de l'AEROSIL^{®} R202 ont une taille d'environ 16 nm.

### Catalyseur de réticulation (D) :

Le catalyseur de réticulation (D) utilisable dans la composition selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR^{®} AA75 auprès de la société DuPont), de l'aluminium comme le chélate d'aluminium (disponible commercialement sous la dénomination K-KAT^{®} 5218 auprès de la société King Industries), des amines comme le 1,8-diazobicyclo (5.4.0) undécène-7 ou DBU.

### Résine silsesquioxane (E) :

Outre les ingrédients (A), (B), (C) et (D), la composition adhésive réticulable selon l'invention comprend au moins une résine silsesquioxane.

Les résines silsesquioxanes sont des composés organiques de silicium pouvant adopter une structure polyhédrique ou une structure polymérique, avec des liaisons Si-O-Si. Ils ont généralement la formule générale suivante :

[RSiO_{3/2}]t

dans laquelle R, de nature identique ou différente, représente un radical organique, et t est un nombre entier pouvant varier de 6 à 12, de préférence t égale 6, 8, 10 ou 12.

Selon un mode de réalisation, le silsesquioxane (E) a une structure polyhédrique (ou POSS pour « Polyhedral Oligomeric Silsesquioxane » en anglais).

De préférence, le silsesquioxane (E) répond à la formule générale (V) suivante : 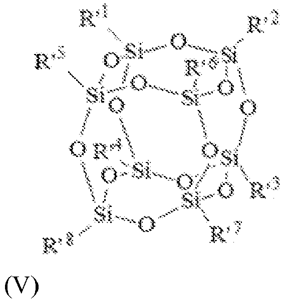 dans laquelle chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C1-C4, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi dans le groupe constitué des alkyles linéaires ou ramifiés en C1-C4, des alcoxys linéaires ou ramifiés en C1-C4, des alcényles en C2-C4, d'un phényle, d'un radical allyle en C3-C6, d'un radical aliphatique cyclique en C3-C8, et d'un radical acyle en C1-C4 ;
à condition :
- qu'au moins un radical parmi les radicaux R'¹ à R'⁸ soit un radical alcoxy en C1-C4; et
- qu'au moins un radical parmi les radicaux R'¹ à R'⁸ soit un radical phényle.

En particulier, le silsesquioxane (E) est un diméthylméthoxyphényl siloxane (numéro CAS = 68957-04-0).

Les silsesquioxanes sont des composés connus qui sont décrits notamment dans la demande WO 2008/107331. Certains sont également disponibles au plan commercial, ainsi le produit de DOW commercialisé sous la dénomination : DOW CORNING^{®} 3074 et DOW CORNING^{®} 3037 (numéro CAS = 68957-04-0).

### Autres additifs :

La composition adhésive réticulable selon l'invention peut également comprendre un ou plusieurs additifs choisis dans le groupe constitué des absorbeurs d'humidité, des plastifiants, des antioxydants, des pigments, des colorants, des promoteurs d'adhérence, des stabilisants UV, des additifs ignifuges ou encore des charges telles que des charges carbonatées, par exemple de type carbonate de calcium.

L'absorbeur d'humidité (ou agent dessicant) peut être par exemple choisi parmi les dérivés alkoxysilane hydrolysables, non polymériques, de masse moléculaire inférieure à 500 g/mol, de préférence choisi parmi les dérivés de triméthoxysilane et de triéthoxysilane. Un tel agent peut typiquement prolonger la durée de conservation de la composition durant le stockage et le transport avant son utilisation. On peut par exemple citer le gamma-métacryloxypropyltriméthoxysilane (par exemple disponible sous la dénomination commerciale SILQUEST ^{®} A-174 auprès de la société MOMENTIVE), le méthacryloxyméthyltriméthoxysilane (par exemple disponible sous la dénomination GENIOSIL ^{®} XL33 auprès de WACKER), le vinyltriméthoxysilane, l'isooctyltriméthoxysilane, ou le phényltriméthoxysilane.

Lorsqu'il est présent, l'absorbeur d'humidité peut par exemple représenter de 0,1% à 3% en poids ou de 1% à 2% en poids par rapport au poids total de la composition selon l'invention.

La composition selon l'invention peut également comprendre un agent plastifiant.

A titre d'exemple d'agent plastifiant utilisable, on peut utiliser n'importe quel agent plastifiant habituellement utilisé dans le domaine des adhésifs, tel que par exemples les phtalates, les benzoates, les esters de trimethylolpropane, les esters de triméthyloléthane, les esters de triméthylolméthane, les esters de glycérol, les esters de pentaerythritol, les huiles minérales napthéniques, les adipates, les cyclohexanedicarboxylates, les huiles paraffiniques, les huiles naturelles (éventuellement époxydées), les polypropylènes, les polybutylènes, les polyisoprènes hydrogénés, et leurs mélanges.

Parmi les phtalates, on peut par exemple citer le diisononyl phtalate, le di-isobutyl phtalate, le dioctyle phtalate, le dicyclohexyl phtalate, le diisooctyle phtalate, le diisododécyle phtalate, le dibenzyle phtalate ou le butylbenzyle phtalate.

Parmi les benzoates, on peut par exemple citer : le néopentylglycol dibenzoate (par exemple disponible sous la dénomination UNIPLEX ^{®} 512 auprès de LANXESS), le dipropylèneglycol dibenzoate (par exemple disponible sous la dénomination BENZOFLEX ^{®} 9-88SG auprès de EASTMAN), un mélange de diéthylène glycol dibenzoate et de dipropylène glycol dibenzoate (par exemple disponible sous la dénomination K-FLEX ^{®} 850 S auprès de KALAMA CHEMICAL), ou encore un mélange de diéthylène glycol dibenzoate, de dipropylène glycol dibenzoate et de triéthylène glycol dibenzoate (par exemple disponible sous la dénomination BENZOFLEX ^{®} 2088 auprès de EASTMAN).

Parmi les esters de pentaérythritol, on peut par exemple citer le tétravalérate de pentaérythritol (par exemple disponible sous la dénomination PEVALEN^{™} auprès de la société PESTORP).

Parmi les cyclohexanedicarboxylates, on peut par exemple citer le diisononyl 1,2-cyclohexanedicarboxylate (par exemple disponible sous la dénomination HEXAMOLL DINCH ^{®} auprès de BASF) ) et le 1,4-bis(2-ethylhexyl)-1,4-cyclohexanedicarboxylate (par exemple disponible sous la dénomination DEHCH auprès de CONNECT CHEMICALS).

La teneur totale en plastifiant(s) dans la composition selon l'invention peut aller de 0% à 30% en poids, de préférence de 1% à 30% en poids, voire par exemple de 1% à 15% en poids par rapport au poids total de ladite composition.

La composition selon l'invention peut également comprendre un antioxydant (désigné également par le terme d'agent stabilisant UV).

Les antioxydants sont des composés qui peuvent être introduits pour protéger la composition d'une dégradation résultant d'une réaction avec de l'oxygène qui est susceptible de se former par action de la chaleur ou de la lumière. Ces composés peuvent inclure des antioxydants primaires qui piègent les radicaux libres. Les antioxydants primaires peuvent être utilisés seuls ou en combinaison avec d'autres antioxydants secondaires ou des stabilisants UV.

On peut par exemple citer l'IRGANOX ^{®} 1010, l'IRGANOX ^{®} B561, l'IRGANOX ^{®} 245, l'IRGANOX ^{®} 1076, l'IRGAFOS ^{®} 168 commercialisés par BASF.

Une quantité d'antioxydant allant de 0,1% à 3%, de préférence de 1% à 3% en poids, sur la base du poids total de la composition selon l'invention est généralement utilisée.

Selon un mode de réalisation, la composition adhésive réticulable selon l'invention comprend :
- de 3% à 90% en poids, de préférence de 5% à 80% en poids, préférentiellement de 10% à 70% en poids, en particulier de 20% à 60% en poids, avantageusement de 36% à 56% en poids d'au moins un polymère (A) comprenant un groupe alkoxysilane hydrolysable ;
- de 8% à 80% en poids, notamment de 15% à 80% en poids, de préférence de 20% à 70%, préférentiellement de 25% à 70%, en particulier de 30% à 60%, avantageusement de 40% à 60% en poids d'au moins une résine tackifiante (B) ;
- de 1% à 10 % en poids, de préférence de 2% à 8 %, avantageusement de 2% à 6 % en poids de la silice pyrogénée (C) ; et
- de 0,01% à 10% en poids, de préférence de 0,01% à 5%, préférentiellement de 0,05% à 4%, avantageusement de 0,1% à 3%, en particulier de 0,5% à 2% en poids de catalyseur de réticulation (D) ;
ces pourcentages en poids étant indiqués sur la base du poids total de ladite composition.

Lorsque, selon une variante préférée de l'invention, la composition adhésive réticulable comprend en outre une résine silsesquioxane (E), la quantité de celle-ci peut varier de 0,1 à 20% en poids, de préférence de 1% à 20% en poids, préférentiellement de 2% à 15% en poids, avantageusement de 3% à 12% en poids, sur la base du poids total de ladite composition.

La composition adhésive réticulable selon l'invention peut être préparée par un procédé qui comprend :
- une étape de mélange, à l'abri de l'air, de préférence sous atmosphère inerte, du polymère (A), de la résine tackifiante (B), et, le cas échéant des autres additifs optionnels, pour former une partie (PA) ; puis
- une étape de mélange du catalyseur de réticulation (D) avec, lorsqu'elle est présente, la résine silsesquioxane (E) ; pour former une partie (PB) ; puis
- une étape d'incorporation de la silice pyrogénée (C) dans la partie (PA), à une température comprise entre 50 et 180°C, de préférence entre 100 et 150°C, jusqu'à l'obtention d'un mélange homogène (PC) ; et enfin
- une étape de mélange de (PC) avec (PB).

### Utilisation de la composition adhésive réticulable :

La présente invention a également pour objet l'utilisation de la composition adhésive réticulable, telle que définie précédemment, pour l'assemblage semi-structural de deux substrats.

On entend par assemblage semi-structural un assemblage de deux substrats dans lequel le joint adhésif est capable de résister à des contraintes de cisaillement comprises dans un domaine allant de 2 à 8 MPa.

Les substrats concernés sont très variés et sont notamment choisis parmi :
- les métaux (comme l'aluminium ou l'acier) et les composites, éventuellement revêtus de peinture (tels ceux utilisés dans le domaine de l'automobile) ;
- le carton, les textiles, le cuir, le verre ;
- les polymères thermoplastiques, comme :
   - les polyoléfines (par exemple le PolyEthylène ou le PolyPropylène) ayant éventuellement reçu un traitement de surface préliminaire, tel qu'un primaire d'accroche, un traitement au plasma, ou encore un traitement corona ;
   - l'Acrylonitrile-Butadiène- Styrène (ou ABS) ;
   - le Styrène-AcryloNitrile (SAN) ;
   - le polychlorure de Vinyle (PVC) ;
   - le polycarbonate ;
   - le poly(méthacrylate de méthyle) (PMMA) ; ou encore
   - les polyesters.

Selon une variante préférée, l'utilisation de la composition adhésive réticulable est mise en œuvre dans les domaines de l'électronique, du bâtiment, de la fabrication des moyens de transport, de préférence de l'industrie automobile, ferroviaire, aérospatiale, et navale. Elle peut également être utilisée pour l'assemblage de deux substrats en extérieur, du fait de sa résistance à des conditions climatiques variables.

### Procédé d'assemblage :

La présente invention a également pour objet un procédé d'assemblage de 2 substrats comprenant :
- une étape (i) de fusion de la composition adhésive telle que définie précédemment, par chauffage à une température comprise entre 30 et 130°C, puis
- une étape (ii) de dépose de ladite composition sur une surface d'un premier substrat, puis
- une étape (iii) comprenant :
   - une étape (iii1) de réticulation de ladite composition par chauffage à une température allant de 15°C à 200°C ; et
   - une étape (iii2) de mise en contact de ladite surface avec une surface d'un second substrat.

Le premier substrat et le second substrat peuvent être différents ou de même nature chimique, et sont tels que définis ci-dessus.

L'étape (i) de fusion est avantageusement mise en œuvre dans un domaine de température qui est plus bas que celui des adhésifs thermofusibles, lequel est généralement de 150°C à 210°C.

Selon une 1^{ère} modalité de réalisation de l'étape (ii), qui est plus particulièrement préférée, la dépose de la composition est effectuée sous la forme d'un cordon. Le diamètre d'un tel cordon est généralement compris dans un domaine allant de de 0,1 mm à 2 cm. Un tel cordon peut être obtenu par extrusion de la composition adhésive à chaud au travers d'une filière reliée ou bien à une cartouche maniée par un opérateur, ou bien à un réservoir dans le cas d'une application robotisée sur une chaîne de montage. Une telle application est particulièrement avantageuse dans les domaines industriels mentionnés ci-dessus pour l'utilisation de la composition. La diminution, voire la suppression, du fluage de la composition adhésive réticulable selon l'invention, permet avantageusement de l'appliquer sous ladite forme de cordon sur des substrats inclinés par rapport à un plan horizontal, et de former après l'étape de réticulation (iii1) un joint adhésif dont l'épaisseur et les propriétés mécaniques sont avantageusement uniformes.

Selon une 2^{ème} modalité de réalisation de l'étape (ii), la dépose de la composition est effectuée sous la forme d'une couche d'épaisseur comprise entre 0,1 mm et 2 cm, de préférence entre 1 mm et 10 mm. Une telle couche peut être obtenue par pulvérisation, par extrusion (par exemple au moyen d'une filière, telle qu'une buse à lèvre), par enduction (par exemple au moyen de rouleaux ou de racles).

L'étape (iii1) de réticulation de la composition adhésive selon l'invention est mise en œuvre par chauffage de ladite composition à une température allant de 15°C à 200°C.

Selon une première variante de ce mode de réalisation, ladite étape (iii1) est mise en œuvre à une température allant de 15°C à 45°C, de préférence à température ambiante, en particulier entre 18°C et 25°C, notamment à 23°C, et en présence de l'humidité de l'atmosphère environnante, en particulier à une humidité absolue de 20 à 60 g d'eau par m³ d'air, de préférence de 40 à 60 g/m³. De telles conditions de réticulation sont particulièrement avantageuses puisqu'elles permettent de réaliser un procédé industriel de réticulation qui ne nécessite pas la présence d'un four. Elles permettent également de choisir le second substrat parmi des substrats sensibles à la chaleur comme le PolyEthylène, le PolyPropylène, les mousses ou des textiles.

Selon une seconde variante de ce mode de réalisation, ladite étape (iii1) est mise en œuvre à une température allant de 90°C à 160°C, de manière encore plus préférée de 120°C à 140°C et en présence d'une humidité absolue allant de 10 à 200 g d'eau par m³ de gaz (notamment d'air), de préférence de 20 à 60 g/m³, encore plus préférentiellement de 40 à 50 g/m³. De telles conditions de réticulations sont par exemple obtenues au moyen de fours (ou de chambres) placés sur des chaînes de montage automatisées.

Cette étape (iii1) de réticulation a notamment pour effet la création -entre les chaînes polymériques à groupe terminal alkoxysilane hydrolysable de la composition adhésive et sous l'action de l'humidité atmosphérique- de liaisons de type siloxane qui conduisent à la formation d'un réseau polymérique tri-dimensionnel.

Dans le procédé d'assemblage selon l'invention, les étapes (i), (ii) et (iii) sont mises en œuvre séquentiellement.

S'agissant des étapes (iii1) et (iii2) comprises dans l'étape (iii), elles peuvent être effectuées dans n'importe quel ordre et même simultanément.

Ainsi, selon une 1^{ère} modalité de réalisation de l'étape (iii), l'étape (iii1) de réticulation de la composition est effectuée jusqu'à l'achèvement de la réaction. Elle est ensuite suivie de l'étape (iii2) de mise en contact (ou « affichage ») du second substrat. Cette modalité est particulièrement avantageuse dans le cas où le second substrat est choisi parmi les substrats sensibles à la chaleur tels que ceux cités plus haut.

Selon une 2^{ème} modalité de réalisation de l'étape (iii), l'étape (iii2) d'affichage est effectuée simultanément à l'étape (iii1) de réticulation, alors même que la réaction de réticulation n'est pas encore achevée. Dans ce cas, ladite réaction de réticulation est poursuivie et achevée, après l'affichage du 2^{nd} substrat.

Selon une 3^{ème} modalité de réalisation de l'étape (iii), l'étape (iii2) d'affichage du second substrat est effectuée en premier lieu, puis est suivie de l'étape (iii1) de réticulation de la composition adhésive comprise entre les 2 surfaces des substrats ainsi mises en contact.

Selon enfin une 4^{ème} modalité de réalisation de l'étape (iii), l'étape (iii1) de réticulation de la composition est effectuée de manière partielle avant l'étape (iii2) de mise en contact (ou « affichage ») du 2^{nd} substrat. Dans ce cas, ladite réaction de réticulation (iii1) est poursuivie et achevée, après l'affichage du 2nd substrat.

La présente invention a enfin pour objet un produit d'assemblage comprenant au moins deux substrats liés par la composition adhésive telle que définie précédemment, à l'état réticulé.

L'invention est à présent décrite dans les exemples de réalisation suivants qui sont donnés à titre purement illustratif, et ne sauraient être interprétés pour en limiter la portée.

### Exemple A (comparatif selon le WO 2020/128200) :

### Composition adhésive réticulable par chauffage à base du GENIOSIL^{®} STP-E30

### A1. Préparation de la composition :

La composition figurant dans le tableau 1 est préparée en introduisant tout d'abord la résine tackifiante Picco^{®} AR100 dans un réacteur en verre sous vide et chauffé à environ 160°C. Puis, une fois la résine bien fondue, le GENIOSIL^{®} STP-E30 est ajouté.

Le mélange est agité sous vide durant 15 minutes, puis refroidi à 70°C. Le catalyseur (K-KAT^{®} 5218) et le silsesquioxane DOW CORNING^{®} 3074 sont alors introduits. Le mélange est maintenu sous vide et sous agitation durant 10 minutes supplémentaires.

### A2. Mesure du fluage (ou sagging) :

La composition ainsi préparée est déposée sur un substrat cartonné au moyen d'un pistolet manuel sous la forme d'un cordon de diamètre 5 mm, à une température de 120°C.

Le cordon est réticulé en position verticale à une température de 140°C et en présence d'une humidité absolue de 50 g/m³, durant un temps de 1 minute.

On mesure alors la distance sur laquelle le cordon s'est écoulé, entre sa position initiale et sa position finale la plus éloignée.

Le résultat obtenu est reporté dans le tableau 1.

### A3. Mesure du temps de réticulation à température ambiante :

La composition préparée en A1 est appliquée à 120 °C, de manière à remplir un moule correspondant à une éprouvette de type H2, telle que définie par la norme NF T46-002, dont l'épaisseur est de 4 mm et dont la partie centrale présente une section rectangulaire de 4 x 2 mm sur une longueur de 25 mm.

Ledit moule est laissé à température ambiante (environ 23°C) et l'on observe le comportement de la composition.

Le temps nécessaire à la réticulation totale est reporté dans le tableau 1.

### A4. Mesure de la contrainte et de l'allongement à la rupture du joint adhésif par essai de traction :

Le principe de la mesure consiste à étirer dans une machine de traction, dont la mâchoire mobile se déplace à une vitesse constante égale à 100 mm/minute, une éprouvette de type H2, telle que définie ci-dessus, constituée de la composition adhésive réticulée et à enregistrer, au moment où se produit la rupture de l'éprouvette, la contrainte appliquée (en MPa) ainsi que l'allongement de l'éprouvette ou élongation (en %).

Les résultats des mesures obtenues sont indiqués dans le tableau 1.

### A5. Mesure de la contrainte à la rupture du joint adhésif sur support en PolyPropylène (PP) par essai de cisaillement :

On utilise 2 éprouvettes parallélépipédiques en PP de longueur 100 mm, de largeur 25 mm et d'épaisseur 2,5 mm.

La composition adhésive, conditionnée dans une cartouche, est appliquée à 120°C sous la forme d'un cordon de diamètre d'environ 5 mm, qui est déposé sur une zone de recouvrement située à l'extrémité d'une 1ère éprouvette, de largeur 25 mm et de longueur 12,5 mm.

Une extrémité de la 2nde éprouvette est alors pressée sur ladite zone, de telle sorte que les 2 éprouvettes étant dans le prolongement l'un de l'autres, leurs deux extrémités libres sont situées symétriquement par rapport à la zone de recouvrement, et que, en utilisant un système de cale et en retirant l'excès d'adhésif au moyen d'une spatule, la couche adhésive résultant de l'écrasement du cordon dans la zone de recouvrement a pour épaisseur 800 µm.

On laisse la composition adhésive réticuler dans l'assemblage ainsi obtenu durant 24 heures, dans des conditions standards (23°C et en présence d'une humidité absolue de 10 g d'eau par m³).

L'assemblage est alors soumis à un essai de cisaillement au moyen d'un dynamomètre opérant à une vitesse de 10 mm/minute jusqu'à séparation des deux éprouvettes et rupture de l'assemblage.

L'essai est répété 3 fois et la moyenne des contraintes de cisaillement correspondant à la rupture de l'assemblage est reportée dans le tableau 1.

### A6. Test de résistance en température du joint adhésif :

### A6.1 : Préparation préalable d'une couche support PET revêtue de la composition réticulée, à raison d'un grammage égal à 60 g/m² :

On utilise comme couche support une feuille rectangulaire de PolyEthylèneTéréphtalate (PET) d'épaisseur 50 µm et de dimensions 20 cm sur 40 cm.

On préchauffe la composition obtenue au point A1. à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 60 g/m², ce qui représente environ une épaisseur de l'ordre de 60 µm.

La feuille de PET ainsi enduite est alors placée dans une étuve à 120 °C et sous atmosphère humide (50 g/m³ d'humidité absolue) durant 5 minutes pour réticulation de la composition, puis contrecollée sur une couche anti-adhérente protectrice (ou «release liner ») consistant en une feuille de film siliconé, rectangulaire et de mêmes dimensions.

Le tricouche obtenu est soumis au test décrit ci-après.

### A6.2 : Temps de résistance au cisaillement statique à 125°C du joint adhésif :

La résistance à la chaleur du joint adhésif constitué de la composition adhésive réticulée est évaluée par un test qui détermine le temps de résistance dudit joint adhésif au cisaillement statique à 125°C. Il est fait référence pour ce test à la méthode FINAT n° 8. Le principe est le suivant.

Une éprouvette sous forme de bande rectangulaire (25 mm x 75 mm) est découpée dans le tricouche obtenu précédemment et est conservée à température ambiante (23°C, 50% d'humidité) durant 24 heures.

Après enlèvement de la totalité de la couche anti-adhérente protectrice, une portion carrée de 25 mm de côté située à l'extrémité de la bande adhésive est fixée sur une plaque de verre.

La plaque d'essai ainsi obtenue est introduite, au moyen d'un support approprié, en position sensiblement verticale dans une étuve à 125°C, la partie non collée de la bande de longueur 50 mm se situant en dessous de la plaque. Après équilibrage thermique, la partie restée libre de la bande est reliée à une masse de 1 kg, l'ensemble du dispositif restant toujours durant la durée du test maintenu dans l'étuve à 125°C.

Sous l'effet de cette masse, le joint adhésif qui assure la fixation de la bande sur la plaque est soumis à une contrainte de cisaillement. Pour mieux contrôler cette contrainte, la plaque d'essai est en fait placée de sorte à faire un angle de 2° par rapport à la verticale.

On note le temps au bout duquel la bande se décroche de la plaque à la suite de la rupture du joint de colle sous l'effet de cette contrainte.

Le résultat, exprimé en heures, est indiqué dans le tableau 1.

### Exemples B et C : Compositions adhésives à base du GENIOSIL^{®} STP-E30 comparatives

On répète la préparation de la composition de l'exemple A telle qu'indiquée au point A1, sauf que :
- pour l'exemple B : on n'introduit pas de silsesquioxane,
- pour l'exemple C : on n'introduit pas de silsesquioxane, et après ajout du catalyseur puis agitation de 10 minutes, on introduit l'AEROSIL^{®} R202, et l'on agite de nouveau durant environ 10 minutes.

On répète la mesure du fluage, du temps de réticulation à température ambiante, ainsi que les essais de traction et de cisaillement, comme indiqués au points A2, A3, A4, A5 et A6. On obtient les résultats indiqués dans le tableau 1.

### Exemples 1 et 2 selon l'invention : Compositions adhésives réticulables à température ambiante à base du GENIOSIL^{®} STP-E30

On répète la préparation de la composition de l'exemple A telle qu'indiquée au point A1, sauf que, après ajout du catalyseur et du silsesquioxane puis agitation de 10 minutes, on introduit l'AEROSIL^{®} R202, et l'on agite de nouveau durant environ 10 minutes.

On répète la mesure du fluage, du temps de réticulation à température ambiante, ainsi que les essais de traction et de cisaillement, comme indiqués au points A2, A3, A4 et A5. On obtient les résultats indiqués dans le tableau 1.

On observe que :
- le fluage (sagging) de la composition des exemples 1 et 2 est, par rapport à l'exemple B, largement abaissé. En outre, le fluage de la composition de l'exemple 2 est supprimé, ce qui montre l'effet supérieur de la combinaison de la résine silsesquioxane (E) avec la silice pyrogénée (C), en comparaison de l'effet de la résine silsesquioxane (E) (exemple A) ou de la silice pyrogénée (C) (exemple C) ;
- pour l'exemple 2 : le temps de réticulation à température ambiante de la composition est, par rapport à l'exemple B, considérablement diminué (de plus d'un facteur 2) ;
- pour l'exemple 2 : la contrainte à la rupture par traction du joint adhésif est nettement augmentée par rapport à l'exemple B. Or, l'ajout séparé de résine silsesquioxane (E) ou de silice pyrogénée (C) conduit à une diminution de la contrainte à la rupture (exemples A et C). L'augmentation de la contrainte à la rupture par traction observée pour l'ajout d'une combinaison de résine silsesquioxane (E) et de silice pyrogénée (C) est donc totalement inattendue et démontre une synergie entre ces ingrédients ;
- la cohésion du joint adhésif des exemples 1 et 2 dans l'assemblage de substrats PP, évaluée par la contrainte à la rupture par cisaillement, est, à la différence des exemples A et B, d'un ordre de grandeur représentatif d'un adhésif semi-structural. A titre de référence, la valeur correspondante déterminée pour l'adhésif thermofusible PolyAmide commercialisé par Bostik SA comme adhésif semi-structural sous la dénomination HM4229, est de 6 MPa. Il est à noter que l'ajout d'une résine silsesquioxane (E) sans silice pyrogénée (C) (exemple A) n'a aucun effet sur la contrainte à la rupture en comparaison à l'exemple B. On s'attendrait donc à ce que l'ajout d'une combinaison de résine silsesquioxane (E) et de silice pyrogénée (C) conduirait à la même contrainte à la rupture qu'une composition comprenant de la silice pyrogénée (C) sans résine silsesquioxane (E) (exemple C). Or, la contrainte à la rupture est encore augmentée, ce qui démontre un effet synergique entre ces ingrédients.

On répète également la préparation de la couche support auto-adhésive de PET, telle qu'indiquée au point A6.1., sauf que la feuille de PET enduite est laissée à température et humidité ambiantes (environ 23°C et 10 g/m³ en humidité absolue) durant 7 H pour réticulation, avant d'être contrecollée sur la couche anti-adhérente protectrice. Le tricouche obtenu est ensuite soumis au test décrit au point A6.2, qui conduit aux résultats indiqués dans le tableau 1.

Les résultats montrent que l'ajout de résine silsesquioxane (E) (exemple A) conduit à une amélioration de la résistance au cisaillement à 125°C (comparaison avec l'exemple B), tandis que l'ajout de de silice pyrogénée (C) (exemple C) n'a presque d'effet sur la résistance au cisaillement à 125°C. En revanche, on observe pour le joint adhésif des exemples 1 et 2 des valeurs de résistance au cisaillement à 125°C qui démontrent une cohésion en température bien supérieure à celle des exemples A, B et C. Ainsi, l'ajout d'une combinaison de résine silsesquioxane (E) et de silice pyrogénée (C) permet d'améliorer de façon surprenante la résistance au cisaillement à 125°C, ces ingrédients agissant en synergie. En outre, une telle cohésion peut avantageusement être obtenue à température et humidité ambiantes, sans mise en œuvre d'un four (ou étuve) comme pour les exemples A, B et C.

**Tableau 1**

| Ingrédient | | Teneur en % poids/poids | | | | |
|---|---|---|---|---|---|---|
| | | Exemple A | Exemple B | Exemple C | Exemple 1 | Exemple 2 |
| (A) | GENIOSIL^{®} STP-E30 | 42,4 | 44,7 | 42,4 | 40,84 | 40,19 |
| (B) | Picco^{®} AR100 | 51,6 | 54,3 | 51,6 | 49,71 | 48,94 |
| (C) | AEROSIL^{®} R202 | - | - | 5 | 3,5 | 5,0 |
| (D) | K-KAT ^{®} 5218 | 1 | 1 | 1 | 0,98 | 0,98 |
| (E) | DOW CORNING^{®} 3074 | 5 | - | - | 4,97 | 4,89 |
| Sagging (cm) | | 5 | 15 | 1 | 1 | 0 |
| Temps de réticulation à température ambiante (heures) | | 24 | 18 | 5,67 | ND | 7 |
| Essai de traction du joint adhésif : | | | | | | |
| | - contrainte à la rupture(MPa) | 0,16 | 0,28 | 0,11 | ND | 0,39 |
| | - élongation à la rupture(%) | 326 | ND | ND | ND | 300 |
| Essai de cisaillement du joint adhésif : | | * | * | 3 | 4 | 5 |
| | - contrainte à la rupture(MPa) | | | | | |
| Temps de résistance au cisaillement à 125°C du joint adhésif (heures) | | 24 | 16 | 15,5 | 70 | 40 |

| | | | | | | |
|---|---|---|---|---|---|---|
| ND = Non Déterminé * : inférieure à la sensibilité du capteur de force | | | | | | |

## Revendications

1. Composition adhésive réticulable, **caractérisée en ce qu'**elle comprend :
- au moins un polymère (A) comprenant un groupe alkoxysilane hydrolysable ;
- au moins une résine tackifiante (B) ;
- au moins une silice pyrogénée (C) ;
- au moins un catalyseur de réticulation (D) ; et
- une résine silsesquioxane (E).

2. Composition adhésive selon la revendication 1, **caractérisée en ce que** le polymère (A) comprend au moins un, et de préférence au moins deux, groupements hydrolysables de formule (1) :
-Si(R⁴)ₚ(OR⁵)₃₋ₚ (1)
dans laquelle :
- R⁴ représente un radical alkyl linéaire ou ramifié comprenant de 1 à 4 atomes de carbone, avec la possibilité que quand il y a plusieurs radicaux R⁴, ces derniers soient identiques ou différents ;
- R⁵ représente un radical alkyl linéaire ou ramifié comprenant de 1 à 4 atomes de carbone, avec la possibilité que quand il y a plusieurs radicaux R⁵, ces derniers soient identiques ou différents, avec la possibilité que deux groupements OR⁵ puissent être engagés dans un même cycle ; et
- p est un nombre entier égal à 0, 1 ou 2, de préférence égal à 0 ou 1.

3. Composition adhésive selon l'une des revendications 1 ou 2, **caractérisée en ce que** la silice pyrogénée (C) est hydrophobe.

4. Composition adhésive selon la revendication 3, **caractérisée en ce que** la silice pyrogénée hydrophobe (C) est obtenue par traitement d'une silice pyrogénée avec un PolyDiMéthylSiloxane.

5. Composition adhésive selon l'une des revendications 1 à 4, **caractérisée en ce que** la silice pyrogénée (C) possède une surface spécifique BET d'au moins 10 m²/g, de préférence allant de 50 à 400 m²/g.

6. Composition adhésive selon l'une des revendications 1 à 5, **caractérisée en ce que** la résine silsesquioxane (E) répond à la formule générale (V) suivante : 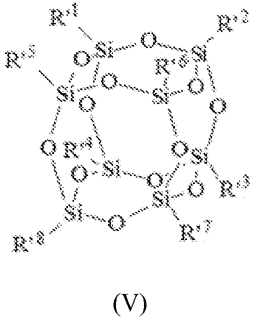 dans laquelle chacun de R'¹ à R'⁸ représente, indépendamment les uns des autres, un groupe choisi parmi :
- un atome d'hydrogène,
- un radical choisi parmi le groupe constitué d'un radical alcoxy linéaire ou ramifié en C1-C4, un radical alkyle linéaire ou ramifié comprenant de 1 à 30 atomes de carbone, un radical alcényle comprenant de 2 à 30 atomes de carbone, un radical aromatique comprenant de 6 à 30 atomes de carbone, un radical allyle comprenant de 3 à 30 atomes de carbone, un radical cyclique aliphatique comprenant de 3 à 30 atomes de carbone, un radical acyle comprenant de 1 à 30 atomes de carbone, et
- un groupe -OSiR'⁹R'¹⁰ dans lequel R'⁹ et R'¹⁰ représente chacun, indépendamment l'un de l'autre, un atome d'hydrogène ou un radical choisi dans le groupe constitué des alkyles linéaires ou ramifiés en C1-C4, des alcoxys linéaires ou ramifiés en C1-C4, des alcényles en C2-C4, d'un phényle, d'un radical allyle en C3-C6, d'un radical aliphatique cyclique en C3-C8, et d'un radical acyle en C1-C4 ;
à condition :
- qu'au moins un radical parmi les radicaux R'¹ à R'⁸ soit un radical alcoxy en C1-C4; et
- qu'au moins un radical parmi les radicaux R'¹ à R'⁸ soit un radical phényle.

7. Composition adhésive selon l'une des revendications 1 à 6, **caractérisée en ce qu'**elle comprend :
- de 3% à 90% en poids d'au moins un polymère (A) ;
- de 8% à 80% en poids d'au moins une résine tackifiante (B) ;
- de 1% à 10 % en poids de la silice pyrogénée (C) ;
- de 0,01% à 10% en poids de catalyseur de réticulation (D) ; et
- de 0,1% à 20% en poids de résine silsesquioxane (E) ;
ces pourcentages en poids étant indiqués sur la base du poids total de ladite composition.

8. Utilisation de la composition adhésive réticulable, telle que définie dans l'une des revendications 1 à 7, pour l'assemblage semi-structural de deux substrats.

9. Utilisation selon la revendication 8 dans les domaines de l'électronique, du bâtiment, de la fabrication des moyens de transport, de préférence de l'industrie automobile, ferroviaire, aérospatiale, et navale.

10. Procédé d'assemblage de 2 substrats comprenant :
- une étape (i) de fusion de la composition adhésive, telle que définie dans l'une des revendications 1 à 7, par chauffage à une température comprise entre 30 et 130°C, puis
- une étape (ii) de dépose de ladite composition sur une surface d'un premier substrat, puis
- une étape (iii) comprenant :
- une étape (iii1) de réticulation de ladite composition par chauffage à une température allant de 15°C à 200°C ; et
- une étape (iii2) de mise en contact de ladite surface avec une surface d'un second substrat.

11. Procédé selon la revendication 10, **caractérisé en ce que** dans l'étape (ii) la composition est déposée sur la surface du premier substrat sous la forme d'un cordon.

12. Procédé selon la revendication 10, **caractérisé en ce que** dans l'étape (ii) la composition est déposée sur la surface du premier substrat sous la forme d'une couche d'épaisseur comprise entre 0,1 mm et 2 cm.

13. Procédé selon l'une des revendications 10 à 12, **caractérisé en ce que** l'étape (iii1) de réticulation est mise en œuvre à une température allant de 15°C à 45°C, de préférence à température ambiante, en particulier entre 18°C et 25°C, notamment à 23°C, et en présence de l'humidité de l'atmosphère environnante, en particulier à une humidité absolue de 20 à 60 g d'eau par m³ d'air, de préférence de 40 à 60 g/m³.

14. Procédé selon l'une des revendications 10 à 12, **caractérisé en ce que** l'étape (iii1) de réticulation est mise en œuvre à une température allant de 90°C à 160°C et en présence d'une humidité absolue allant de de 10 à 200 g d'eau par m³ de gaz, de préférence de 20 à 60 g/m³.

15. Produit d'assemblage comprenant au moins deux substrats liés par la composition adhésive telle que définie dans l'une des revendications 1 à 7.

## Patentansprüche

1. Vernetzbare Klebstoffzusammensetzung, **dadurch gekennzeichnet, dass** sie Folgendes umfasst:
- mindestens ein Polymer (A), das eine hydrolysierbare Alkoxysilangruppe umfasst;
- mindestens ein klebrigmachendes Harz (B);
- mindestens eine pyrogene Kieselsäure (C);
- mindestens einen Vernetzungskatalysator (D) und
- ein Silsesquioxanharz (E).

2. Klebstoffzusammensetzung nach Anspruch 1, **dadurch gekennzeichnet, dass** das Polymer (A) mindestens ein und vorzugsweise mindestens zwei hydrolysierbare Gruppen der Formel (I) umfasst:
-Si(R⁴)ₚ(OR⁵)₃₋ₚ (I),
wobei:
- R⁴ für einen linearen oder verzweigten Alkylrest steht, der 1 bis 4 Kohlenstoffatome umfasst, wobei dann, wenn mehrere Reste R⁴ vorliegen, diese gleich oder verschieden sein können;
- R⁵ für einen linearen oder verzweigten Alkylrest steht, der 1 bis 4 Kohlenstoffatome umfasst, wobei dann, wenn mehrere Reste R⁵ vorliegen, diese gleich oder verschieden sein können, wobei sich zwei Gruppen OR⁵ im gleichen Ring befinden können; und
- p eine ganze Zahl gleich 0, 1 oder 2, vorzugsweise gleich 0 oder 1, ist.

3. Klebstoffzusammensetzung nach einem der Ansprüche 1 oder 2, **dadurch gekennzeichnet, dass** die pyrogene Kieselsäure (C) hydrophob ist.

4. Klebstoffzusammensetzung nach Anspruch 3, **dadurch gekennzeichnet, dass** die hydrophobe pyrogene Kieselsäure (C) durch die Behandlung einer pyrogenen Kieselsäure mit einem Polydimethylsiloxan erhalten wird.

5. Klebstoffzusammensetzung nach einem der Ansprüche 1 bis 4, **dadurch gekennzeichnet, dass** die pyrogene Kieselsäure (C) eine spezifische BET-Oberfläche von mindestens 10 m²/g, vorzugsweise von 50 bis 400 m²/g, aufweist.

6. Klebstoffzusammensetzung nach einem der Ansprüche 1 bis 5, **dadurch gekennzeichnet, dass** das Silsesquioxanharz (E) der folgenden allgemeinen Formel (V): 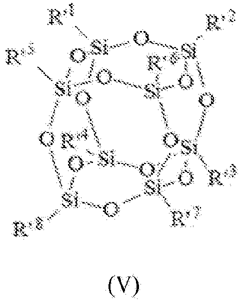 entspricht, wobei jeder von R'¹ bis R'⁸ unabhängig voneinander für eine Gruppe steht, die ausgewählt ist aus:
- einem Wasserstoffatom,
- einem Rest, der ausgewählt ist aus der Gruppe bestehend aus einem linearen oder verzweigten C1-C4-Alkoxyrest, einem linearen oder verzweigten Alkylrest, der 1 bis 30 Kohlenstoffatome umfasst, einem Alkenylrest, der 2 bis 30 Kohlenstoffatome umfasst, einem aromatischen Rest, der 6 bis 30 Kohlenstoffatome umfasst, einem Allylrest, der 3 bis 30 Kohlenstoffatome umfasst, einem aliphatischen cyclischen Rest, der 3 bis 30 Kohlenstoffatome umfasst, einem Acylrest, der 1 bis 30 Kohlenstoffatome umfasst, und
- einer Gruppe -OSiR'⁹R'¹⁰, wobei jeder R'⁹ und R'¹⁰ jeweils unabhängig voneinander für ein Wasserstoffatom oder einen Rest stehen, der ausgewählt ist aus der Gruppe bestehend aus linearen oder verzweigten C1-C4-Alkylen, linearen oder verzweigten C1-C4-Alkoxys, C2-C4-Alkenylen, einem Phenyl, einem C3-C6-Allylrest, einem cyclischen aliphatischen C3-C8-Rest und einem C1-C4-Acylrest;
unter der Bedingung:
- dass mindestens ein Rest der Reste R'¹ bis R'⁸ ein C1-C4-Alkoxyrest ist und
- dass mindestens ein Rest der Reste R'¹ bis R'⁸ ein Phenylrest ist.

7. Klebstoffzusammensetzung nach einem der Ansprüche 1 bis 6, **dadurch gekennzeichnet, dass** sie Folgendes umfasst:
- 3 Gew.-% bis 90 Gew.-% mindestens eines Polymers (A);
- 8 Gew.-% bis 80 Gew.-% mindestens eines klebrigmachenden Harzes (B);
- 1 Gew.-% bis 10 Gew.-% der pyrogenen Kieselsäure (C);
- 0,01 Gew.-% bis 10 Gew.-% Vernetzungskatalysator (D) und
- 0,1 Gew.-% bis 20 Gew.-% Silsesquioxanharz (E); wobei diese Gewichtsprozente bezogen auf das Gesamtgewicht der Zusammensetzung angegeben sind.

8. Verwendung der vernetzbaren Klebstoffzusammensetzung gemäß der Definition in einem der Ansprüche 1 bis 7 zur semistrukturellen Verbindung von zwei Substraten.

9. Verwendung nach Anspruch 8 auf den Gebieten der Elektronik, des Bauwesens, der Herstellung von Transportmitteln, vorzugsweise in der Automobil-, Bahn- und Luft- und Raumfahrtindustrie und im Schiffbau.

10. Verfahren zur Verbindung von 2 Substraten, das Folgendes umfasst:
- einen Schritt (i) des Schmelzens der Klebstoffzusammensetzung gemäß der Definition in einem der Ansprüche 1 bis 7 durch Erwärmen auf eine Temperatur zwischen 30 und 130 °C, dann
- einen Schritt (ii) des Abscheidens der Zusammensetzung auf einer Fläche eines ersten Substrats, dann
- einen Schritt (iii), der Folgendes umfasst:
- einen Schritt (iii1) des Vernetzens der Zusammensetzung durch Erwärmen auf eine Temperatur von 15 °C bis 200 °C und
- einen Schritt (iii2) des In-Kontakt-Bringens der Fläche mit einer Fläche eines zweiten Substrats.

11. Verfahren nach Anspruch 10, **dadurch gekennzeichnet, dass** in Schritt (ii) die Zusammensetzung auf der Fläche des ersten Substrats in Form einer Raupe abgeschieden wird.

12. Verfahren nach Anspruch 10, **dadurch gekennzeichnet, dass** in Schritt (ii) die Zusammensetzung auf der Fläche des ersten Substrats in Form einer Schicht mit einer Dicke zwischen 0,1 mm und 2 cm abgeschieden wird.

13. Verfahren nach einem der Ansprüche 10 bis 12, **dadurch gekennzeichnet, dass** der Vernetzungsschritt (iii1) bei einer Temperatur von 15 °C bis 45 °C, vorzugsweise bei Umgebungstemperatur, insbesondere zwischen 18 °C und 25 °C, im Besonderen bei 23 °C und in Gegenwart einer Feuchtigkeit der Umgebungsatmosphäre, insbesondere bei einer absoluten Feuchtigkeit von 20 bis 60 g, vorzugsweise 40 bis 60 g/m³ Wasser pro m³ Luft, durchgeführt wird.

14. Verfahren nach einem der Ansprüche 10 bis 12, **dadurch gekennzeichnet, dass** der Vernetzungsschritt (iii1) bei einer Temperatur von 90 °C bis 160 °C und in Gegenwart einer absoluten Feuchtigkeit von 10 bis 200 g, vorzugsweise 20 bis 60 g/m³ Wasser pro m³ Gas, durchgeführt wird.

15. Montiertes Produkt, das mindestens zwei Substrate umfasst, die durch die Klebstoffzusammensetzung gemäß der Definition in einem der Ansprüche 1 bis 7 verbunden sind.

## Claims

1. A crosslinkable adhesive composition, **characterized in that** it comprises:
- at least one polymer (A) comprising a hydrolyzable alkoxysilane group;
- at least one tackifying resin (B);
- at least one pyrogenic silica (C);
- at least one crosslinking catalyst (D); and
- a silsesquioxane resin (E).

2. The adhesive composition as claimed in claim 1, **characterized in that** the polymer (A) comprises at least one, and preferably at least two, hydrolyzable groups of formula (I):
-Si(R⁴)ₚ(OR⁵)₃₋ₚ (I)
wherein:
- R⁴ represents a linear or branched alkyl radical comprising from 1 to 4 carbon atoms, with the possibility that, when there are several R⁴ radicals, these radicals are identical or different;
- R⁵ represents a linear or branched alkyl radical comprising from 1 to 4 carbon atoms, with the possibility that, when there are several R⁵ radicals, these radicals are identical or different, with the possibility that two OR⁵ groups can participate in the same ring; and
- p is an integer equal to 0, 1 or 2, preferably equal to 0 or 1.

3. The adhesive composition as claimed in one of claims 1 or 2, **characterized in that** the pyrogenic silica (C) is hydrophobic.

4. The adhesive composition as claimed in claim 3, **characterized in that** the hydrophobic pyrogenic silica (C) is obtained by treatment of a pyrogenic silica with a polydimethylsiloxane.

5. The adhesive composition as claimed in one of claims 1 to 4, **characterized in that** the pyrogenic silica (C) has a BET specific surface area of at least 10 m²/g, preferably ranging from 50 to 400 m²/g.

6. The adhesive composition as claimed in one of claims 1 to 5, **characterized in that** the silsesquioxane resin (E) corresponds to the following general formula (V): 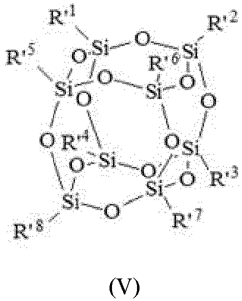 in which each of R'¹ to R'⁸ represents, independently of one another, a group chosen from:
- a hydrogen atom,
- a radical chosen from the group consisting of a linear or branched C1-C4 alkoxy radical, a linear or branched alkyl radical comprising from 1 to 30 carbon atoms, an alkenyl radical comprising from 2 to 30 carbon atoms, an aromatic radical comprising from 6 to 30 carbon atoms, an allyl radical comprising from 3 to 30 carbon atoms, a cyclic aliphatic radical comprising from 3 to 30 carbon atoms and an acyl radical comprising from 1 to 30 carbon atoms, and
- an -OSiR'⁹R'¹⁰ group in which R'⁹ and R'¹⁰ each represents, independently of one another, a hydrogen atom or a radical chosen from the group consisting of linear or branched C1-C4 alkyls, linear or branched C1-C4 alkoxys, C2-C4 alkenyls, a phenyl, a C3-C6 allyl radical, a cyclic C3-C8 aliphatic radical and a C1-C4 acyl radical;
provided:
- that at least one radical among the R'¹ to R'⁸ radicals is a C1-C4 alkoxy radical; and
- that at least one radical among the R'¹ to R'⁸ radicals is a phenyl radical.

7. The adhesive composition as claimed in one of claims 1 to 6, **characterized in that** it comprises:
- from 3% to 90% by weight of at least one polymer (A);
- from 8% to 80% by weight of at least one tackifying resin (B);
- from 1% to 10% by weight of the pyrogenic silica (C);
- from 0.01% to 10% by weight of crosslinking catalyst (D); and
- from 0.1% to 20% by weight of silsesquioxane resin (E);
these percentages by weight being indicated on the basis of the total weight of said composition.

8. Use of the crosslinkable adhesive composition as defined in one of claims 1 to 7, for the semi-structural assembly of two substrates.

9. The use as claimed in claim 8 in the fields of electronics, construction, the manufacture of means of transport, preferably in the automotive, rail, aerospace and shipbuilding industries.

10. A process for assembling two substrates, comprising:
- a step (i) of melting the adhesive composition as defined in one of claims 1 to 7, by heating at a temperature of between 30 and 130°C, then
- a step (ii) of depositing said composition on a surface of a first substrate, then
- a step (iii) comprising:
- a step (iii1) of crosslinking said composition by heating at a temperature ranging from 15°C to 200°C; and
- a step (iii2) of bringing said surface into contact with a surface of a second substrate.

11. The process as claimed in claim 10, **characterized in that**, in step (ii), the composition is deposited on the surface of the first substrate in the form of a bead.

12. The process as claimed in claim 10, **characterized in that**, in step (ii), the composition is deposited on the surface of the first substrate in the form of a layer having a thickness of between 0.1 mm and 2 cm.

13. The process as claimed in one of claims 10 to 12, **characterized in that** the crosslinking step (iii1) is performed at a temperature ranging from 15°C to 45°C, preferably at ambient temperature, in particular between 18°C and 25°C, particularly at 23°C, and in the presence of ambient humidity, in particular at an absolute humidity of 20 to 60 g of water per m³ of air, preferably from 40 to 60 g/m³.

14. The process as claimed in one of claims 10 to 12, **characterized in that** the crosslinking step (iii1) is performed at a temperature ranging from 90°C to 160°C and in the presence of an absolute humidity ranging from 10 to 200 g of water per m³ of gas, preferably from 20 to 60 g/m³.

15. An assembled product comprising at least two substrates bonded by the adhesive composition as defined in one of claims 1 to 7.
